# EUROPEAN PATENT APPLICATION

(11) **EP 4 474 299 A1**
(43) Date of publication of application: **11.12.2024**
(21) Application number: 24179161.5
(22) Date of filing: 31.05.2024
(51) Int. Cl.: B65B 51/30, B65B 9/20, B65B 65/00, B29C 65/36

(54) **PACKAGE FORMING APPARATUS AND PACKAGING MACHINE FOR FORMING PACKAGES**

(30) Priority: 08.06.2023 IT 202300011748
(71) Applicant: Tetra Laval Holdings & Finance S.A., 1009 Pully (CH)
(72) Inventor: PRADELLI, Massimo, 41123 Modena (IT); BARBI, Massimiliano, 41123 Modena (IT)
(74) Representative: Tetra Pak - Patent Attorneys SE

(57) **Abstract**

There is described a package forming apparatus (1) comprising a first operative unit (4) and a second operative unit (5) spaced apart from one another and defining an advancement space (6) within which, in use, a tube (3) advances. Each one of the first operative unit (4) and the second operative unit (5) comprises a plurality of respective operative devices (7), a respective conveyor device (8) configured to advance the respective plurality of operative devices (7). Each operative device (7) comprises a respective cart (12) moveably coupled to the conveyor device (8) and an operative group (13) connected to and being laterally spaced apart from the respective cart (12) such that the respective operative group (13) is adapted to move within the advancement space (6). Each conveyor device (8) comprises a control unit (14) configured to advance the respective carts (12) and a support structure (15) spaced apart from the control unit (14) and moveably supporting the respective operative groups (13). Each support structure (15) comprises a first guide (16) and a second guide (17) spaced apart from the first guide (16).

## Description

### TECHNICAL FIELD

The present invention relates to a package forming apparatus for forming packages, preferentially sealed packages, for pourable products, preferentially pourable food products.

Advantageously, the present invention also relates to a packaging machine comprising a package forming apparatus for forming packages, preferentially sealed packages, for pourable products, preferentially pourable food products.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber in which the web of packaging material is maintained and advanced. During advancement of the web of packaging material through the isolation chamber, the web of packaging material is formed into a tube and longitudinally sealed.

For completing the forming operations, the tube is filled with a pourable product, e.g. a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus configured to form, transversally seal and cut individual packages from the tube of packaging material.

One kind of packaging forming apparatus as e.g. described in EP-A-3254980, comprises a plurality of operative devices, each one having a respective cart and a respective operative group carried by and laterally protruding from the respective cart. The packaging machine also includes a conveying device configured to advance the carts along an endless advancement path so as to also advance the respective operative groups along an endless path. During advancement of each cart along a respective operative portion of the respective endless advancement path the respective operative group is configured to manipulate the tube so as to form the packages from the tube.

Moreover, the conveying devices comprises a support structure moveably carrying the carts. The support structure comprises two pairs of a first endless guide and a second guide. Each cart comprises a first coupling assembly and a second coupling assembly connected to respective lateral end portions of the respective cart. Each first coupling assembly and each second coupling assembly is coupled to, respectively, one corresponding first guide and one corresponding second guide thereby stabilizing the advancement of the operative devices.

Even though the known packaging machines and/or package forming apparatus work satisfactorily well, a desire is felt in the sector to further improve the known packaging machines and/or the known package forming apparatus.

### DISCLOSURE OF INVENTION

It is therefore an object of the present invention to provide an improved package forming apparatus for forming sealed packages.

According to the present invention, there is provided a package forming apparatus as claimed in claim 1.

Preferred non-limiting embodiments of the package forming apparatus are claimed in the claims being directly and indirectly dependent on claim 1.

According to the present invention, there is provided a packaging machine as claimed in claim 15.

### BRIEF DESCRIPTION OF THE DRAWINGS

A non-limiting embodiment of the present invention will be described by way of example with reference to the accompanying drawings, in which:
Figure 1 shows a schematic view of a package forming apparatus according to the present invention, with parts removed for clarity;
Figure 2 shows a perspective view of a portion of the package forming apparatus of Figure 1, with parts removed for clarity;
Figure 3 shows a further perspective view of the portion of Figure 2, with parts removed for clarity;
Figure 4 shows a detail of the portion of Figures 2 and 3, with parts removed for clarity; and
Figure 5 is a perspective view of a further detail of the portion of Figures 3 and 4.

### BEST MODES FOR CARRYING OUT THE INVENTION

Number 1 indicates as a whole a package forming apparatus for producing packages 2, preferentially sealed packages, of a pourable product, in particular a pourable food product, such as milk, milk drinks, yoghurt, yoghurt drinks, fruit juice, wine, tomato sauce, emulsions, beverages containing pulp, salt, sugar, etc., from a tube 3, preferentially advancing along a tube advancement path P and preferentially being filled with the pourable product.

Preferentially, package forming apparatus 1 may be part of a packaging machine configured to produce package 2 of the pourable product.

In more detail, the packaging machine may be preferentially configured to produce packages 2 from a multilayer packaging material; preferentially, the multilayer packaging material may have heat-seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web of packaging material.

Furthermore, the packaging machine may be configured to produce packages 2 by forming tube 3 from the web of packaging material, longitudinally sealing tube 3, filling tube 3 with the pourable product and by operating package forming apparatus 1 for at least partially shaping tube 3, transversally sealing, and preferentially transversally cutting tube 3.

In more detail, the packaging machine may comprise a tube forming apparatus configured to form and longitudinally seal tube 3 and a filling apparatus configured to fill tube 3 with the pourable product.

Preferentially, tube 3 may extend along a central axis. Moreover, the tube forming apparatus may also comprise:
- a conveying unit configured to advance the web of packaging material along a web advancement path, preferentially to a tube forming station, at which, in use, the web of packaging material is formed into tube 3, and configured to advance tube 3 along tube advancement path P; and
- a tube forming and sealing device configured to form tube 3 from the, in use, advancing web of packaging material and to longitudinally seal tube 3.

In further detail, the tube forming apparatus may also comprise an isolation chamber, preferentially delimiting an inner sterile environment from an outer environment. Preferentially, tube forming and sealing device may be at least partially arranged within the isolation chamber, in particular within the inner environment, and being configured to fold and longitudinally seal tube 3 within the isolation chamber, in particular within the inner environment.

Moreover, the packaging machine may also comprise a sterilization unit configured to sterilize the, in use, advancing web of packaging material, preferentially the sterilization unit being arranged upstream of the tube forming apparatus.

Preferentially, package forming apparatus 1 may be arranged downstream of the tube forming apparatus and may be configured to receive tube 3 from the tube forming apparatus.

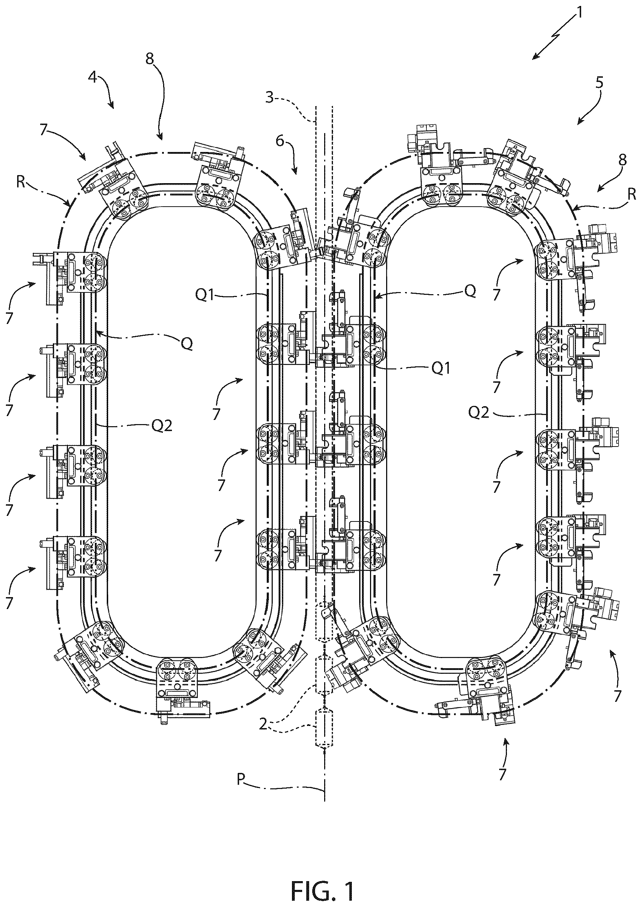

In further detail and with particular reference to Figure 1, package forming apparatus 1 may be configured to manipulate tube 3 being formed from the web of packaging material.

Package forming apparatus 1 comprises a first operative unit 4 and a second operative unit 5 spaced apart from one another and defining an advancement space 6 within which, in use, tube 3 advances.

Preferentially, first operative unit 4 and second operative unit 5 are configured to cooperate with one another so as to manipulate tube 3 for forming packages 2 from the, in use, advancing tube 3.

In particular, first operative unit 4 and second operative unit 5 may be spaced apart from one another along a direction transversal, preferentially perpendicular, to tube advancement path P.

In more detail, each one of first operative unit 4 and second operative unit 5 comprises:
- a plurality of respective operative devices 7, each one configured to manipulate in collaboration with another operative device 7 tube 3 for forming packages 2 from tube 3; and
- a respective conveyor device 8 configured to advance the respective plurality of operative devices 7.

More specifically, each operative device 7 of first operative unit 4 is configured to cooperate with a respective operative device 7 of second operative unit 5 for manipulating, preferentially at least partially shaping and/or transversally sealing and/or transversally cutting tube 3 for forming packages 2 from tube 3.

Even more specifically, each operative device 7 of first operative unit 4 and the respective operative device 7 of second operative unit 5 may form a respective pair of operative devices 7 configured to cooperate with one another for manipulating tube 3.

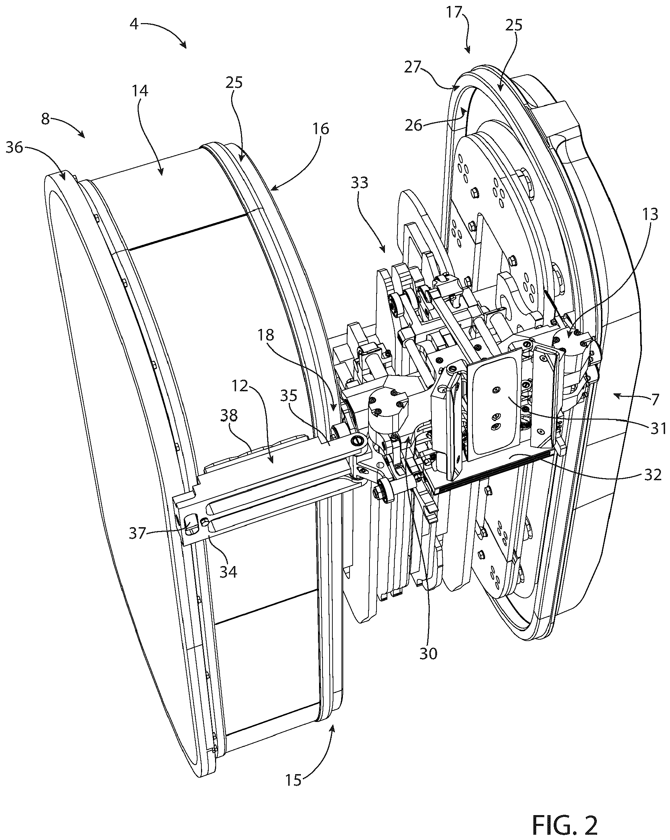

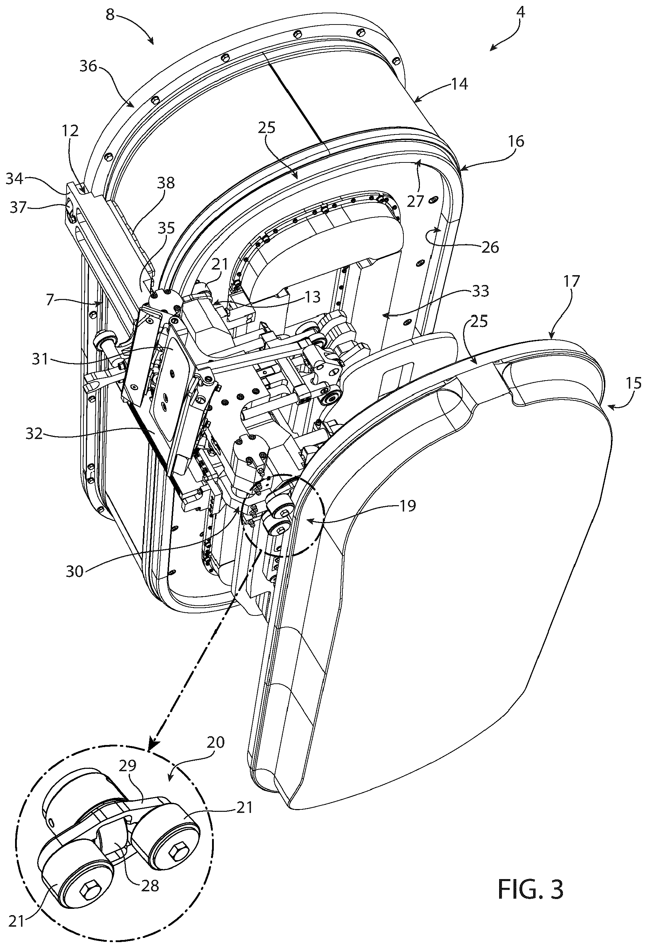

In the following, in particular when referring to Figures 2 and 3, reference is made to first operative unit 4. It must, however, be understood that first operative unit 4 and second operative unit 5 are similar to one another and, therefore, any feature of first operative unit 4 is also reproduced by second operative unit 5 if not stated otherwise. Additionally, any difference between first operative unit 4 and second operative unit 5 may be specifically highlighted.

According to some preferred non-limiting embodiments, each conveyor device 8 may be configured to interact with the respective operative devices 7 by means of a locally controlled electromagnetic field, preferentially so as to advance operative devices 7 along a respective endless path.

With particular reference to Figures 2, 3 and 5, each operative device 7 comprises a cart 12 moveably coupled to the respective conveyor device 8 and an operative group 13 connected to and being laterally spaced apart from the respective cart 12 such that the respective operative group 13 is adapted (able) to move within advancement space 6.

In further detail, each conveyor device 8 comprises a control unit 14 configured to advance, preferentially to selectively advance, the respective carts 12 along an (cart) advancement path Q. Additionally, by advancement of carts 12 along advancement path Q, the respective operative groups 13 advance along an (operative group) advancement path R. Preferentially, advancement path R may be spaced apart from, and preferentially being parallel to, advancement path Q. According to the example shown, each advancement path Q may be surrounded by the respective advancement path R.

Preferentially, each control unit 14 may be configured to advance each one of the respective carts 12 independently from the other respective carts 12. In particular, each control unit 14 may be configured to accelerate and decelerate each respective cart 12 independently from the other respective carts 12.

According to some preferred non-limiting embodiments, each advancement path Q, and preferentially also the respective advancement path R, may be endless and/or annular.

Each conveying device 8 may also comprise a support structure 15 spaced apart from the respective control unit 14 and moveably supporting the respective operative devices 7.

In particular, it should be noted that each operative group 13 advances along advancement path R due to advancement of the respective cart 12 along advancement path Q but is maintained in position by the respective support structure 15. In other words, each support structure 15 guarantees that operative groups 13 are not subject to any undesired movement (e.g. a deflection) so as to guarantee that each operative group 13 remains in its desired and/or ideal and/or nominal position so as to correctly manipulate tube 3.

In more detail, each support structure 15 comprises a respective first guide 16 and a respective second guide 17 spaced apart from one another, preferentially along a direction transversal, more preferentially perpendicular, to tube advancement path P.

More specifically, each first guide 16 may be interposed between the respective control unit 14 and the respective second guide 17.

Preferentially, each first guide 16 may be arranged adjacent to and/or may be connected to the respective control unit 14.

According to some preferred non-limiting embodiments, each first guide 16 and the respective second guide 17 may be parallel to one another.

According to some preferred non-limiting embodiments, each first guide 16 and each second guide 17 may have an annular shape, preferentially an oval shape.

More specifically, each first guide 16 and each second guide 17 may comprise a plurality of linear sections, preferentially at least two, more preferentially exactly two, and a plurality of curved section, preferentially at least two, more preferentially exactly two. Moreover, the respective curved sections may connect the respective linear sections with one another.

With particular reference to Figure 2 and 3, at least a portion of each operative group 13 is interposed between the respective first guide 16 and the respective second guide 17.

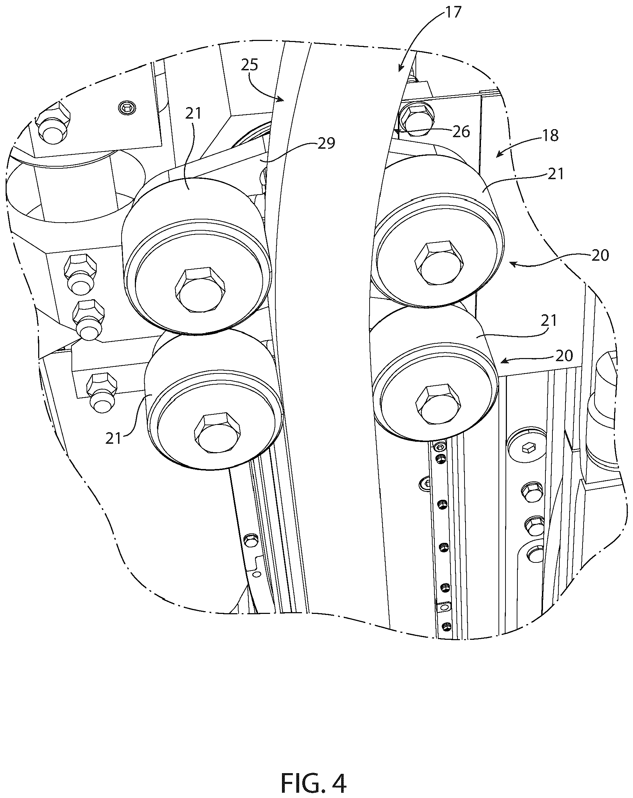

With particular reference to Figures 2 to 5, each operative group 13 comprises a first coupling assembly 18 coupled to and configured to move along the respective first guide 16 and a second coupling assembly 19 coupled to and configured to move along the respective second guide 17.

According to some preferred non-limiting embodiments, each first coupling assembly 18 and each second coupling assembly 19 may comprise at least one pair 20 of rolling elements 21, preferentially at least two pairs 20 of rolling elements 21, more preferentially exactly two pairs 20 of rolling elements 21.

Rolling elements 21 may e.g. be rollers rotatable about respective rotation axes.

Moreover, the respective rolling elements 21 of each pair 20 of rolling elements 21 interposes the respective first guide 16 or the respective second guide 17 between one another and engages the respective first guide 16 or the respective second guide 17 from opposite sides thereof.

In further detail, each first guide 16 and each second guide 17 may comprise a respective first face 25 and a respective second face 26 opposed to the respective first face. Additionally, each first guide 16 and each second guide 17 may also comprise a respective lateral surface 27 transversal to the respective first face 25 and the respective second face 26.

Preferentially, one rolling element 21 of each pair 20 of rolling elements 21 may engage the respective first face 25 and the other rolling element 21 of each pair 20 of rolling elements 21 may engage the respective second face 26.

Moreover, each first coupling assembly 18 and each second coupling assembly 19 may comprise an auxiliary rolling element 28 engaging the respective lateral surface 27. Preferentially, each auxiliary rolling element 28 may be interposed between two respective rolling elements 21, more preferentially between the respective rolling elements 21 of one respective pair 20 of rolling elements 21.

In further detail, to each pair 20 of rolling elements 21 there is associated one respective auxiliary rolling element 28.

Auxiliary rolling elements 28 may e.g. be rollers rotatable about respective rotation axes.

According to some preferred non-limiting embodiments, each first coupling assembly 18 and each second coupling assembly 19 may comprise one or more support elements 29, each one carrying at least one pair 20 of rolling elements 21, preferentially exactly one pair 20 of rolling elements 21. Additionally, each support element 29 may also carry one respective auxiliary rolling element 28.

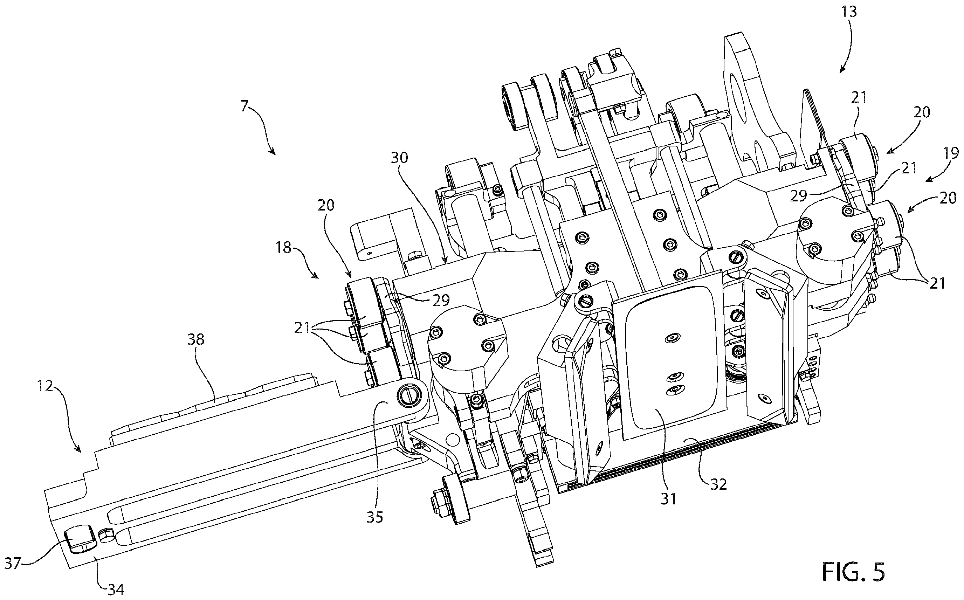

With particular reference to Figure 5, each operative group 13 may comprise a carrier 30 carrying the respective first coupling assembly 18 and the respective second coupling assembly 19. Preferentially, each carrier 30 may comprise a first end and a second end opposed to the first end and the respective first coupling assembly 18 may be connected to the first end and the respective second coupling assembly 19 may be connected to the respective second end.

More specifically, each support element 29 may be connected to the respective carrier 30, e.g. to the respective first end or the respective second end.

Most preferentially, each support element 29 may be connected to carrier 30 and may be angularly moveable with respect to carrier 30, in particular about a respective rotation axis being (substantially) parallel to a central axis extending through the respective first end and the respective second end.

According to some preferred non-limiting embodiments, each operative group 13 may be configured to selectively move between an operative configuration in which operative group 13 is configured to manipulate tube 3 and a rest configuration in which operative group 13 is detached from tube 3.

In particular, each operative group 13 of first operative unit 4 may be configured to cooperate with a respective operative group 13 of second operative unit 5. Preferentially each operative group 13 of first operative unit 4 and the respective operative group 13 of second operative unit 5 may be, in use, simultaneously controlled in the respective operative configuration and the respective rest configuration.

More specifically and with particular reference to Figure 5, each operative group 13 may comprise:
- a half-shell 31 configured to at least partially shape tube 3 with the respective operative group 13 being controlled in the respective operative configuration; and
- one of a sealing element or a counter-sealing element 32, configured to transversally seal tube 3 between adjacent packages 2 with the respective operative group 13 being controlled in the operative configuration.

It should be noted that in Figure 5, there is shown an operative group 13 being provided with counter-sealing element 32.

According to some possible embodiment, each operative group 13 of first operative unit 4 may comprise a respective counter-sealing element 32 and each operative group 13 of second operative unit 5 may comprise a respective sealing element. Alternatively, each operative group 13 of first operative unit 4 may comprise a respective sealing element and each operative group 13 of second operative unit 5 may comprise a respective counter-sealing element 32.

It should be further noted that each operative group 13 having a respective sealing element is configured to cooperate with a respective operative group 13 having a counter-sealing element 32. In this way, each sealing element and the respective counter-sealing element 32 are configured to transversally flat-lay tube 3 and to transversally seal tube 3 in cooperation with one another and with the respective operative groups 13 being controlled in the respective operative configuration.

In further detail, each half-shell 31 may be configured to move between at least a first limit position and a second limit position, e.g. by means of an angular and/or linear movement, in which half-shell 31 may be configured to engage tube 3.

Advantageously, each half-shell 31 may be positioned in the respective first limit position and the respective second limit position with the respective operative group 13 being controlled in respectively the corresponding rest configuration and the corresponding operative configuration.

According to some possible non-limiting embodiments, package forming apparatus 1 may comprise a cam mechanism 33 for controlling half-shells 31 between the respective rest configurations and the respective operative configurations.

According to some preferred non-limiting embodiments, each half-shell 31, each sealing element and each counter-sealing element 32 may be carried by the respective carrier 30.

At least some operative groups 13 may also comprise a cutting element configured to transversally cut tube 3, preferentially with the respective operative group 13 being controlled in the respective operative configuration and after execution of the transversal sealing of tube 3.

Preferentially, each operative group 13 of first operative unit 4 and the respective operative group 13 of second operative unit 5 may comprise together one respective cutting element.

According to some preferred non-limiting embodiment, each control unit 14 may be configured to advance the respective carts 12 along a respective operative portion Q1 and a respective return portion Q2 of the respective advancement path Q, and additionally also the respective operative group 13 advances along a respective operative portion and a respective return portion of the respective advancement path R.

In use and while the respective cart 12 advances along the respective operative portion Q1 and the respective return portion Q2, each operative group 13 may be configured, respectively, to manipulate tube 3 and to be retracted from tube 3. In other words, each operative group 13 may be configured to manipulate tube 3 when advancing along the respective operative portion of advancement path R.

Additionally, each operative group 13 may be controlled from the respective rest configuration to the respective operative configuration while advancing along the respective operative portion of advancement path R. Preferentially, each operative group 13 may be controlled in the respective rest configuration while advancing along the respective return portion of advancement path R.

In further detail, each operative group 13 may advance along the same direction as tube 3 while advancing along the respective operative portion of advancement path R.

According to some preferred non-limiting embodiments, each cart 12 may comprise a first lateral end 34 and a second lateral end 35 being opposed to the respective first lateral end 34.

Preferentially, each cart 12 may be connected to the respective carrier 30.

Preferentially, each second lateral end 35 may be connected to the respective operative group 13, more preferentially the respective carrier 30.

With particular reference to Figures 2 and 3, each controlling unit 14 may comprise a(n) (endless) guide surface 36 configured to guide and/or support movement of the respective carts 12 along the respective advancement path Q.

Preferentially, each cart 12 may comprise a respective roller 37.

Advantageously, each first lateral end 34 may carry the respective roller 37.

According to some preferred non-limiting embodiments, each first guide 16 may be interposed between the respective second guide 17 and the respective guide surface 36.

More specifically, each guide surface 36 may be laterally spaced apart from the respective first guide 16.

Preferentially, each guide surface 36 may be parallel to the respective first guide 16 and the respective second guide 17.

According to some preferred non-limiting embodiments, each guide surface 36 may have an annular shape, preferentially an oval shape.

More specifically, each guide surface 36 may comprise a plurality of linear sections, preferentially at least two, more preferentially exactly two, and a plurality of curved section, preferentially at least two, more preferentially exactly two. Moreover, the respective curved sections may connect the respective linear sections with one another.

According to some preferred non-limiting embodiments, each control unit 14 may be configured to generate an electromagnetic field, preferentially a locally controlled electromagnetic field, for selectively advancing the respective carts 12 along the respective advancement path Q.

More specifically, each control unit 12 may comprise a plurality of induction coils and a powering unit configured to power the induction coils so as to generate locally controlled electromagnetic fields for selectively advancing the respective carts 12.

Advantageously, each cart 12 may comprise at least one magnetic or paramagnetic element 38 configured to interact with the electromagnetic field.

In use, the packaging machine forms packages 2 from a web of packaging material, the packages 2 being filled with the pourable product.

The tube forming apparatus forms tube 3 from the web of packaging material, the filling apparatus fills tube 3 and package forming apparatus 1 manipulates tube 3 so as to obtain packages 2 filled with the pourable product.

In more detail, during operation of package forming apparatus 1 tube 3 advances through advancement space 6 and first operative unit 4 and second operative unit 5 cooperate for obtaining packages 2.

More specifically, each operative device 7 of first operative unit 4 cooperates, preferentially cyclically cooperates, with the respective operative device 7 of second operative unit 4 for forming respective packages 2 from advancing tube 3.

In particular, each control unit 14 controls advancement of the respective carts 12, preferentially independently from one another, along the respective advancement path Q, thereby also controlling advancement of the respective operative groups 13 along the respective advancement path R.

Furthermore, each operative group 13 may be controlled in the respective operative configuration when advancing along the respective operative portion of the respective advancement path R. Moreover, when advancing along the respective return portion of the respective advancement path R each operative group 13 is controlled in the respective rest configuration.

Additionally, advancement of each operative group 13 along the respective return portion allows to bring operative group 13 back to the respective operative portion. In this way, operative groups 13 can cyclically interact with tube 3.

Additionally, each operative group 13 of first operative unit 4 and the respective operative group 13 of second operative unit 5 are configured to manipulate, preferentially to at least partially shape, to transversally seal and to transversally cut, tube 3 in cooperation with one another when advancing along the respective operative portion of the respective advancement path R.

Moreover, each operative group 13 is supported by the respective first guide 16 and the respective second guide 17 during advancement along the respective advancement path R.

The advantages of package forming apparatus 1 and/or the packaging machine according to the present invention will be clear from the foregoing description.

In particular, by supporting each operative group 13 by means of first guide 16 and second guide 17 and due to the presence of the respective first coupling assemblies 18 and the respective second coupling assemblies 19 one ensures that operative groups 13 are not subject to any unwanted movement, in particular during manipulation of tube 3.

Additionally, it is possible to precisely control the position of operative groups 13 with respect to tube 3, thereby further improving the quality of packages 2 being formed.

Clearly, changes may be made to package forming apparatus 1 and/or the packaging machine as described herein without, however, departing from the scope of protection as defined in the accompanying claims.

## Claims

1. **-** A package forming apparatus (1) for forming packages (2) from a tube (3) filled with a pourable product and advancing, in use, along a tube advancement path (P);
the package forming apparatus (1) comprises:
- a first operative unit (4) and a second operative unit (5) spaced apart from one another and defining an advancement space (6) within which, in use, the tube (3) advances;
wherein each one of the first operative unit (4) and the second operative unit (5) comprises:
- a plurality of respective operative devices (7), each one configured to manipulate in collaboration with another operative device (7) the tube (3) for forming the packages (2) ;
- a respective conveyor device (8) configured to advance the respective plurality of operative devices (7);
wherein each operative device (7) comprises a respective cart (12) moveably coupled to the conveyor device (8) and an operative group (13) connected to and being laterally spaced apart from the respective cart (12) such that the respective operative group (13) is adapted to move within the advancement space (6);
wherein each conveyor device (8) comprises a control unit (14) configured to advance the respective carts (12) along an advancement path (Q) and a support structure (15) spaced apart from the control unit (14) and moveably supporting the respective operative groups (13);
wherein each support structure (15) comprises a first guide (16) and a second guide (17) spaced apart from the first guide (16);
wherein at least a portion of each operative group (13) is interposed between the respective first guide (16) and the respective second guide (17) and comprises a first coupling assembly (18) coupled to and configured to move along the first guide (16) and a second coupling assembly (19) coupled to and configured to move along the respective second guide (17).

2. **-** Package forming apparatus according to claim 1, wherein each first guide (16) and each second guide (17) have an annular shape.

3. **-** Package forming apparatus according to claim 1, wherein each first coupling assembly (18) and each second coupling assembly (19) comprises at least one pair (20) of rolling elements (21) interposing, respectively, the respective first guide (16) and the respective second guide (17) between one another and engaging, respectively, the respective first guide (16) and the respective second guide (17) from opposite sides thereof.

4. **-** Package forming apparatus according to claim 3, wherein each first guide (16) and each second guide (17) comprises a first face (25) and a second face (26) opposed to the first face (25) and a lateral surface (27) transversal to the first face (25) and the second face (26);
wherein one rolling element (21) of each pair (20) of rolling elements (21) engages the respective first face (25) and the other rolling element (21) of each pair (20) of rolling elements (21) engages the second face (26);
wherein each first coupling assembly (18) and each second coupling assembly (19) comprises an auxiliary rolling element (28) engaging the respective lateral surface (27).

5. **-** Package forming apparatus according to any one of the preceding claims, wherein each first guide (16) and the respective second guide (17) are parallel to one another.

6. **-** Package forming apparatus according to any one of the preceding claims, wherein each first guide (16) is interposed between the respective control unit (14) and the respective second guide (17).

7. **-** Package forming apparatus according to any one of the preceding claims, wherein each control unit (14) is configured to advance the respective carts (12) along an operative portion (Q1) of the respective advancement path (Q) and a return portion (Q2) of the respective advancement path (Q);
wherein, in use and while the respective cart (12) advances along the respective operative portion (Q1) and the respective return portion (Q2), each operative group (13) is configured to manipulate the tube (3) and is retracted from the tube (3), respectively.

8. **-** Package forming apparatus according to any one of the preceding claims, wherein each first guide (16) is connected to and/or is arranged adjacent to the respective control unit (14).

9. **-** Package forming apparatus according to any one of the preceding claims, wherein each cart (12) comprises a first lateral end (34) carrying a roller (37) engaging an endless guide surface (36) of the control unit (14) and a second lateral end (35) opposed to the first lateral end (34), the second lateral end (35) being connected to the respective operative group (13).

10. **-** Package forming apparatus according to claim 9, wherein each endless guide surface (36) is laterally displaced from the respective first guide (16).

11. **-** Package forming apparatus according to any one of the preceding claims, wherein each operative group (13) is configured to selectively move between an operative configuration, in which the operative group (13) is configured to manipulate the tube (3), and a rest configuration, in which the operative group (13) is detached from the tube (3);
wherein each operative group (13) comprises:
- a half-shell (31) configured to at least partially shape the tube (3) with the respective operative group (13) being controlled in the operative configuration; and
- one of a sealing element or a counter-sealing element (32), configured to transversally seal the tube (3) between adjacent packages (2) with the respective operative group (13) being controlled in the respective operative configuration.

12. - Package forming apparatus according to any one of the preceding claims, wherein each control unit (14) is configured to generate an electromagnetic field for selectively advancing the respective carts (12) along the respective advancement path (Q).

13. **-** Package forming apparatus according to claim 12, wherein the control unit (14) comprises a plurality of induction coils and a powering unit configured to selectively power the induction coils so as to generate locally controlled electromagnetic fields for selectively advancing the respective carts (12).

14. **-** Package forming apparatus according to claim 12 or 13, wherein each cart (12) comprises at least one magnetic or paramagnetic element (38) configured to interact with the electromagnetic field.

15. **-** Packaging machine for forming packages (2) filled with a pourable product comprising a tube forming apparatus configured to form a tube (3) from a web of packaging material and a package forming apparatus 1 according to any one of the preceding claims being configured to form the packages from the tube.
